# EUROPEAN PATENT SPECIFICATION

(11) **EP 0 474 738 B1**
(45) Date of publication and mention of the grant of the patent: **22.02.1995**
(21) Application number: 90908933.6
(22) Date of filing: 29.05.1990
(51) Int. Cl.: F16K 31/02

(54) **SHUTOFF VALVE**
ABSPERRVENTIL
VANNE D'ARRET

(30) Priority: 29.05.1989 DK 2622/89
(43) Date of publication of application: 18.03.1992
(73) Proprietor: BM CONTROLS A/S, DK-8722 Hedensted (DK)
(72) Inventor: HANSEN, Jorn, Havgaard, DK-7000 Fredericia (DK)
(74) Representative: Knudsen, Christian Egtved
(86) International application number: DK9000132
(87) International publication number: WO9015277

(56) References cited:
- US-A- 2 698 159
- US-A- 3 970 282
- US-A- 4 008 876

## Description

### Technical Field

The invention relates to a shutoff valve comprising a stationary and a movable member, where the movable member at least comprises a primary valve means and a secondary valve means, the primary valve means and the secondary valve means being interconnected through at least one driving means and through at least one carrier means.

### Background Art

US 3,970,282 discloses a shutoff valve according to the preamble of claim 1, comprising a stationary member and a movable member, the movable member comprising primary means and secondary means, such as a valve shaft. The secondary valve means is moved through almost the entire lift of the valve relative to both the stationary valve member and to the primary means. Further this citation discloses a needle valve, the flange on the needle and the armature not being interconnected when the valve is in the opening moment. The connection between the needle and the armature is established by an energy-storing spring in the opening moment. Consequently, the impact effect necessary for releasing a valve disc from the valve seat under extreme conditions is not available.

### Disclosure of Invention

The object of the invention is to provide a shutoff valve of the above type, where the amount of energy necessary for activating the shutoff valve is minimized, and where the activating energy is independent of the pressure conditions to a higher degree than previuosly, said pressure conditions applying on both sides of the valve disk.

The shutoff valve according to the invention is characterised in that said primary means is formed by a valve disc having a cavity closed by a carrier ring through which the end portion of the shaft projects, said driving means is in the form of a spring being mounted in said cavity between said carrier ring and said carrier means formed by a flange on the end portion of the valve shaft, so that immediately before the valve is opened or closed, the secondary valve means is moved through almost the entire lift of the valve and consequently relative to both the stationary valve member and to the primary valve means, and that the primary valve means is not moved until after said movement of the secondary valve means. In this manner it is rendered possible by way of a slight force to supply an amount of energy sufficient for accelerating and consequently for moving the secondary valve means relative to the primary means. Furthermore the primary valve means and the secondary valve means are rigidly interconnected in the opening or closing moment.

According to the invention the primary valve means of the shutoff valve may substantially be made of a neutral or a non-magnetic material, and the secondary valve means may substantially be made of magnetic or magnetizable material, whereby the secondary valve means can be moved by means of a magnet simultaneously with the primary valve means being manufacturable of relatively light materials, such as aluminum.

Furthermore according to the invention both the primary valve means and the secondary valve means may substantially be made of a magnetic or magnetizable material, whereby the effect of the driving means can be reduced.

Moreover according to the invention, the shutoff valve may be characterised in that the movable member comprises a shaft, a secondary spring, a carrier ring, a valve disk, a valve gasket, a primary spring, a locking ring and a rubber knob, whereby a simple structure of the shutoff valve is obtained.

According to an advantageous embodiment of the shutoff valve according to the invention, the secondary spring is less resilient than the primary spring, and the valve is moved by means of a solenoid.

Finally the shutoff valve may according to the invention be characterised in that the movement of the secondary valve means before the opening or closing of the valve corresponds to more than approximately 70% of the lift, preferably between approximately 70% and approximately 90% of the lift, especially approximately 80% of the lift. In this manner sufficient energy is stored in the secondary valve means with the result that the primary valve means can open even when subjected to very strong counterpressures.

### Brief Description of the Drawing

The invention is described in greater detail below with reference to the accompanying drawing, in which
Fig. 1 is a perspective view of a shutoff valve according to the invention,
Fig. 2 is a partially sectional view on a larger scale of the shutoff valve of Fig. 1,
Fig. 3 illustrates the valve arrangement of Fig. 2, and
Fig. 4 in princpiple the position of the anchoring means when the valve is closed and immediately before said valve is being opened.

### Best Mode for Carrying Out the Invention

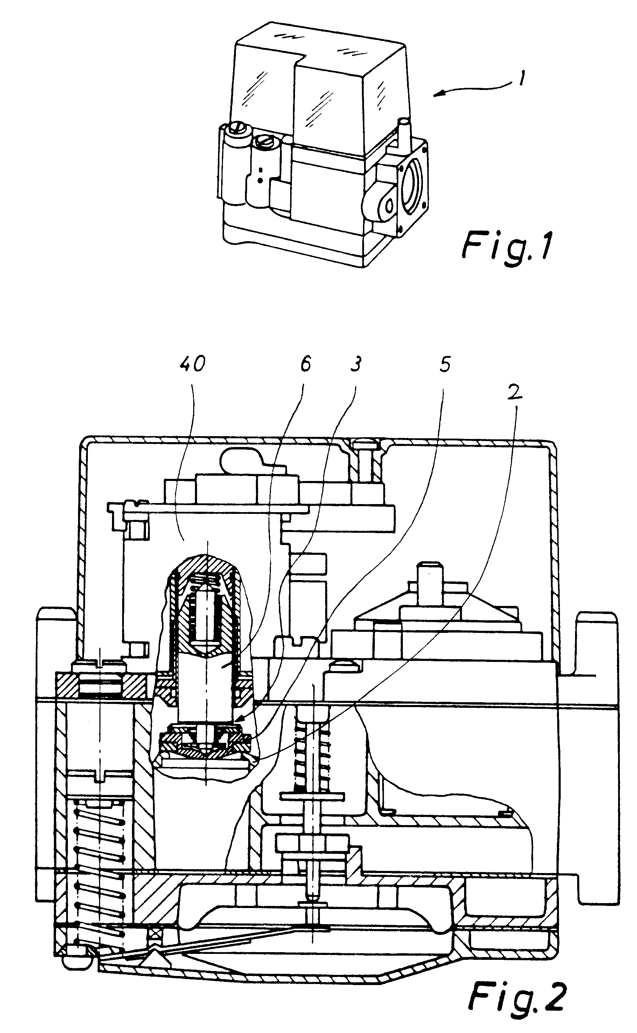

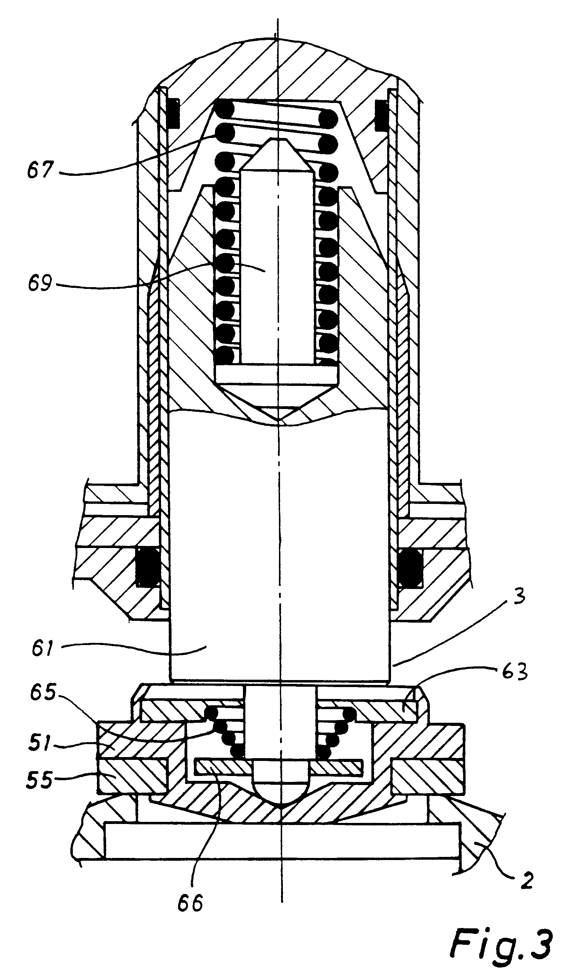

The shutoff valve is generally designated the reference numeral 1, cf. Fig. 1, and comprises a stationary 2 and a movable member 3, where the movable member 3 in turn comprises a valve disk 51, a valve shaft 61, a carrier ring 63, a valve gasket 55, at last two torsion springs - a primary 67 and a secondary 65 torsion spring - a rubber knob 69 and a locking ring 66, cf. Figs. 2 and 3. The shaft 61 of the valve is magnetizable, and the primary spring 67 is arranged inside the valve shaft 61, said primary spring 67 usually providing the force keeping the valve closed. The force of the primary spring is such that the valve can be kept closed despite the surface forces caused by the pressure conditions applying on both sides of the closing area of the valve at the same time as the solenoid 40 is capable of opening the valve. The secondary spring is such that it is capable of ensuring that the primary valve means is kept pressed against the secondary valve means when the valve is open. The rubber knob 69 is placed inside the primary spring 67 in the shaft 61, said rubber knob dampening the impact effect of the anchoring means inside the solenoid 40 as well as ensuring a release of the valve in connection with a drop in tension.

The movable members 3 of the valve are formed by the primary means 5 and the secondary means 6, where the primary means 5 may either be magnetizable or unmagnetizable, and where the secondary means 6 usually is magnetizable. The primary means 5 and the secondary means 6 communicate by way of a spring arrangement 65 in such a manner that the secondary means 6 can be moved relative to the primary means 5. The movable member 3 of the valve may comprise more than two mutually movable means. By the shutoff valve according to the invention, the dividing line between the primary valve means 5 and the secondary valve means 6 is placed immediately below the valve disk 51, but it is also possible to place said dividing line at a higher level within the magnetic field. The placing of the dividing line depends on the hammering effect or impuls by which the secondary valve means must be able to influence the primary valve means.

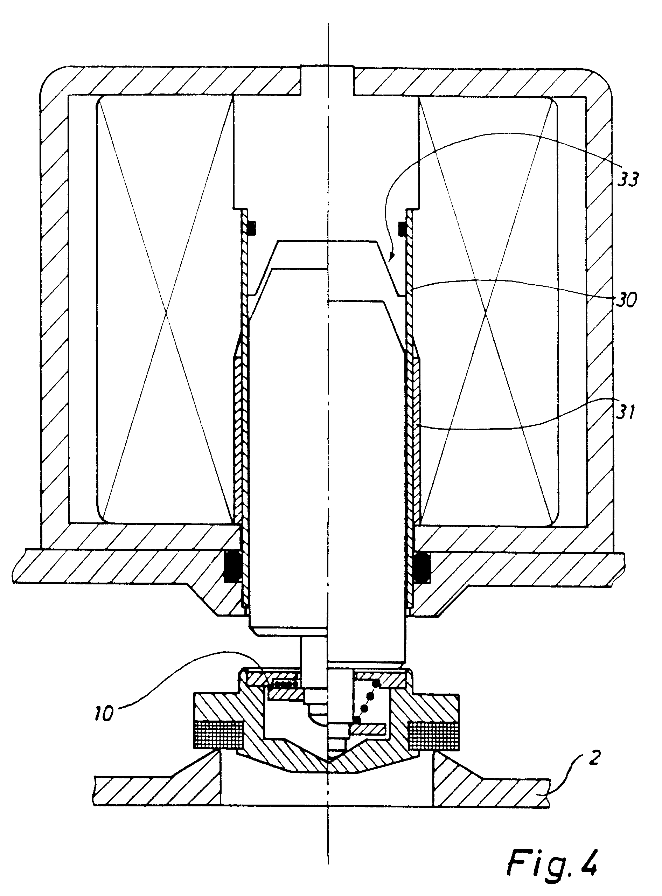

The valve may be magnetically, electrically, hydraulicly or purely mechanically activated. The magnetic activation can be carried out by means of a movable magnet or a movable core, optionally a movable coil. Under all circumstances, various ways are provided for optimizing the force/position function by means of lengths of tubes 30, 31, such as steel 31, and inclining surfaces 33 on the anchoring means inside the solenoid, cf. Fig. 4.

A low copper consumption is aimed at in connection with the magnetic coil in order to minimize the costs. As to the electric activation a low consumption of power is aimed at both during the activating procedure and during the following maintaining of the open or closed position of the valve. The valve may be hydraulicly activated either by means of oil, air or another fluid. It may also be of interest to minimize the necessary activating power. When the valve is mechanically activated, it may also be of interest to minimize the activating force. The latter can also be achieved by the above hammering effect.

The object of all the above measures is to ensure a reasonable ratio of often contradicting factors, such as pressure ratios in the valve and activating force, both with respect to costs and size. When testing and classifying valves for for instance gas in connection with gas boilers, the pressure ratios applying on the input side and the output side of the valve are of interest. The pressures on the input side are usually in the range of 10 mbar to 100 mbar, but the valve according to the invention is capable of operating at an input pressure of up to about 600 mbar without increasing the magnetic system. It is possible to ensure a blocking for counterpressures - i.e. on the output side -of about 150 mbar. Provisions also apply to the tension necessary for activating the valve as well as to the tension at which the valve must close, such as in connection with a drop in tension. The voltages are alternating current or direct current directly on the magnetic valve.

The invention is not limited to the above embodiments but may be varied in many ways without thereby deviating from the scope thereof.

Thus a slight movement - substantially less than 80% of the lift - can also cause an effect.

## Claims

1. Shutoff valve comprising a stationary (2) and a movable member (3), where the movable member (3) at least comprises a primary valve means (5) and a secondary valve means (6) including a shaft (61), the primary valve means (5) and the secondary valve means (6) being interconnected through at least one driving means and through at least one carrier means, **characterised** in that said primary means (5) is formed by a valve disc (51) having a cavity closed by a carrier ring (63) through which the end portion of the shaft (61) projects, said driving means is in the form of a spring (65) being mounted in said cavity between said carrier ring (63) and said carrier means formed by a flange (10, 66) on the end portion of the valve shaft (61), so that immediately before the valve is opened or closed, the secondary valve means (6) is moved through almost the entire lift of the valve and consequently relative to both the stationary valve member (2) and to the primary valve means (5), and that the primary valve means (5) is not moved until after said movement of the secondary valve means (6).

2. Shutoff valve as claimed in claim 1, **characterised** in that the primary valve means (5) substantially is made of a neutral or a non-magnetic material, and that the secondary valve means (6) substantially is made of magnetic or magnetizable material.

3. Shutoff valve as claimed in claim 1, **characterised** in that both the primary valve means (5) and the secondary valve means (6) substantially are made of magnetic or magnetizable material.

4. Shutoff valve as claimed in one or more of the claims 1 to 3, **characterised** in that the movable member (3) comprises a shaft (61), a secondary spring (65), a carrier ring (63), a valve disk (53), a valve gasket (55), a primary spring (67), a locking ring (66) and a rubber knob (69).

5. Shutoff valve as claimed in one or more of the claims 1 to 4, **characterised** in that the secondary spring (65) is less resilient than the primary spring (67).

6. Shutoff valve as claimed in one or more of the claims 1 to 5, **characterised** in that the valve is moved by means of a solenoid (40).

7. Shuttoff valve as claimed in one or more of the claims 1 to 6, **characterised** in that the movement of the secondary valve means (6) before the opening or closing of the valve corresponds to more than approximately 70% of the lift, preferably between approximately 70% and approximately 90% of the lift, especially approximately 80% of the lift.

## Patentansprüche

1. Absperrventil umfassend ein stationäres (2) und ein bewegliches Element (3), wobei das bewegliche Element (3) wenigstens ein Hauptventilmittel (5) und ein Nebenventilmittel (6) mit einem Schaft (61) umfaßt, wobei das Hauptventilmittel (5) und das Nebenventilmittel (6) über wenigstens ein Antriebsmittel und wenigstens ein Trägermittel verbunden sind, dadurch gekennzeichnet, daß das Hauptventilmittel (5) durch eine Ventilscheibe (51) mit einem durch einen Trägerring (63) verschlossenen Hohlraum gebildet ist, durch den der Endbereich des Schaftes (61) hervorsteht, wobei das Antriebsmittel in der Form einer Feder (65) ausgebildet ist, die in dem Hohlraum zwischen dem Trägerring (63) und dem Trägermittel befestigt ist, das durch einen Flansch (10, 66) auf einem Endbereich des Ventilschaftes (61) gebildet ist, so daß unmittelbar bevor das Ventil geöffnet oder geschlossen wird, das Nebenventilmittel (6) fast vollständig durch den gesamten Hub des Ventils bewegt wird und folglich in bezug sowohl auf das stationäre Ventilelement (2) als auch auf das Hauptventilmittel (5), und daß das Hauptventilmittel (5) nicht vor der Bewegung des Nebenventilmittels (6) bewegt wird.

2. Absperrventil nach Anspruch 1, dadurch gekennzeichnet, daß das Hauptventilmittel (5) im wesentlichen aus einem neutralen oder einem nicht-magnetischen Material besteht, und daß das Nebenventilmittel (6) im wesentlichen aus einem magnetischen oder magnetisierbaren Material besteht.

3. Absperrventil nach Anspruch 1, dadurch gekennzeichnet, daß sowohl das Hauptventilmittel (5) als auch das Nebenventilmittel (6) im wesentlichen aus magnetischem oder magnetisierbarem Material bestehen.

4. Absperrventil nach irgendeinem dar Ansprüche 1 bis 3, dadurch gekennzeichnet, daß das bewegliche Element (3) einen Schaft (61) umfaßt, eine Nebenfeder (65), einen Trägerring (63), eine Ventilscheibe (53), eine Ventildichtung (55), eine Hauptfeder (67, einen Sperring (66) und einen Gummiknopf (69).

5. Absperrventil nach irgendeinem der Ansprüche 1 bis 4, dadurch gekennzeichnet, daß die Nebenfeder (65) weniger elastisch als die Hauptfeder (67) ist.

6. Absperrventil nach irgendeinem der Ansprüche 1 bis 5, dadurch gekennzeichnet, daß das Ventil mittels einer Spule betätigt wird.

7. Absperrventil nach irgendeinem der Ansprüche 1 bis 6, dadurch gekennzeichnet, daß die Bewegung des Nebenventilmittels (6) vor dem Öffnen oder Schließen des Ventils mehr als etwa 70 % des Hubes entspricht, vorzugsweise zwischen ungefähr 70 % und ungefähr 90 % des Hubes, vorzugsweise ungefähr 80 % des Hubes.

## Revendications

1. Vanne d'arrêt comprenant un élément fixe (2) et un élément mobile (3), dans laquelle l'élément mobile (3) comprend au moins un organe principal (5) de vanne et un organe secondaire (6) de vanne comprenant une tige (61), l'organe principal (5) de vanne et l'organe secondaire (6) de vanne étant reliés mutuellement par l'intermédiaire d'au moins un moyen d'entraînement et par l'intermédiaire d'au moins un moyen de support mobile, caractérisée en ce que ledit organe principal (5) est formé par un disque (51) de vanne comportant une cavité fermée par une bague de support (63) à travers laquelle la partie terminale de la tige (61) fait saillie, ledit moyen d'entraînement se présente sous la forme d'un ressort (65) monté dans ladite cavité entre ladite bague de support (63) et ledit moyen de support mobile formé par un collet (10, 66) sur la partie terminale de la tige (61) de valve, de telle sorte que, immédiatement avant l'ouverture ou la fermeture de la vanne, l'organe secondaire (6) de vanne soit déplacé sur la presque totalité de la course de levée de la vanne et, par conséquent, par rapport à la fois à l'élément fixe (2) de vanne et à l'organe principal (5) de vanne et que l'organe principal (5) de vanne ne soit pas déplacé avant ledit déplacement de l'élément secondaire (6) de vanne.

2. Vanne d'arrêt selon la revendication 1, caractérisée en ce que l'organe principal (5) de vanne est formé essentiellement d'un matériau neutre ou non magnétique, et que l'organe secondaire (6) de vanne est formé essentiellement d'un matériau magnétique ou aimantable.

3. Vanne d'arrêt selon la revendication 1, caractérisée en ce que l'organe principal (5) de vanne et l'organe secondaire (6) de vanne sont tous deux formé d'un matériau magnétique ou aimantable.

4. Vanne d'arrêt selon une ou plusieurs des revendications 1 à 3, caractérisée en ce que l'élément mobile (3) comprend une tige (61), un ressort secondaire (65), une bague de support (63), un disque (53) de vanne, un joint (55) de vanne, un ressort principal (67), une bague de blocage (66) et un bouton (69) en caoutchouc.

5. Vanne d'arrêt selon une ou plusieurs des revendications 1 à 4, caractérisée en ce que le ressort secondaire (65) est moins élastique que le ressort principal (67).

6. Vanne d'arrêt selon une ou plusieurs des revendications 1 à 5, caractérisée en ce que la vanne est mue au moyen d'un solénoïde (40).

7. Vanne d'arrêt selon une ou plusieurs des revendications 1 à 6, caractérisée en ce que le déplacement de l'organe secondaire (6) de vanne correspond, avant l'ouverture ou la fermeture de la vanne, à plus de 70% environ de la course de levée, de préférence entre environ 70% et environ 90% de la course de levée, spécialement à environ 80% de la course de levée.
